(19) Europäisches Patentamt

European Patent Office

Office européen des brevets

(11) Publication number: **0 016 228**
**A1**

# EUROPEAN PATENT APPLICATION
published in accordance with Art. 158(3) EPC

(21) Application number: **79900195.3**

(22) Date of filing: **30.01.79**

Data of the international application taken as a basis:

(86) International application number:
**PCT/JP79/00022**

(87) International publication number:
**WO79/00815**
International publication date:
**18.10.79**

(51) Int. Cl.³: **H 02 J 7/24**
**G 05 F 1/10**

(30) Priority: **23.03.78 JP 37554/78**

(43) Date of publication of application:
**01.10.80 Bulletin 80/20**

(84) Designated Contracting States:
**DE FR GB**

(71) Applicant: **MITSUBISHI DENKI KABUSHIKI KAISHA
2-3, Marunouchi 2-chome Chiyoda-ku
Tokyo(JP)**

(72) Inventor: **MORISHITA, Mitsuharu Mitsubishi Denki
Kabushiki Kaisha Himeji Seisakusho
840, Chiyoda-cho Himeji-shi Hyogo 670(JP)**

(74) Representative: **Roberts, Peter William et al,
MARKS & CLERK Alpha Tower ATV Centre
Birmingham, B1 1TT(GB)**

(54) CHARGING GENERATOR CONTROLLERS.

(57) To improve the thermal resistance, thermal shock resistance and vibration-proof property, a controlling unit of a charging generator controller is, in the form of a package, separated from the generator and the output unit of the charging generator controller, which output unit is hermetically sealed in a metal case. In addition, the control unit is arranged so as not to be affected by heat generated from an engine, charging generator and the controller itself whereby temperature correction may be made with accuracy. This is thus adapted for the controllers in case of charging an automotive battery for a vehicle or the like by a charging generator.

# CHARGING GENERATOR CONTROL DEVICE .

## FIELD OF THE ART

This invention relates to a charging generator control device for charging a battery with the output voltage from a charging generator.

## BACKGROUND OF THE INVENTION

In general, in a charging generator or "alternator", an AC generator unit, a full-wave rectifier and three-phase auxiliary diode are provided along with a charging generator control device adapted to maintain the output voltage of the AC generator unit at a predetermined value. The control device may be mounted either inside or outside of the charging generator unit with the control and output sections of the control device being integral with one another. Furthermore, in the charging generator control device, the resistors, semiconductive devices, and capacitors used therein are in general sealed individually or are constructed in the form of an integrated circuit encased in metal or resin and surrounded by a flexible resin material such as silicone, epoxy or urethane resin. A charging generator control device using a resin case can be manufactured at relatively low cost. However, its heat resistance and thermal-shock resistance characteristics are inferior to those of a charging generator control device whose components are sealed such as by welding or brazing in a metal case. Furthermore, it may be desired to mount a charging generator control device whose control section and output section form a single unit separate from a charging generator installed on the engine, specifically to mount the control device on a part of the vehicle body which is substantially equal in temperature to the battery so that the charging characteristics are corrected in accordance with the temperature of the battery by providing a negative temperature gradient for the control value. In such a case, the field current varies with the load of the charging generator thereby changing the temperature of the charging generator control device making it difficult to perform accurate temperature correction in accordance with the temperature of the battery.

## DISCLOSURE OF THE INVENTION

In accordance with this invention, the output section and the control section in the charging generator control device are provided as two separate package units with only the control section sealed in a molded or metal case which is positioned remote from the charging generator. A surge absorbing diode, power transistors or the like employed in the output section are sealed in a metal case so that the heat resistance and thermal-shock resistance characteristics thereof are improved so as to be substantially equivalent to those of a full-wave rectifier enclosed in a metal case which has been found to operate satisfactorily. Furthermore, as only the control section is mounted on a part of the vehicle body which is substantially equal in temperature to the battery, no heat is generated therein. Thus, the charging generator control device according to the invention is advantageous in that it can be manufactured at relatively low cost and can perform temperature correction of the charging characteristics accurately in response to the ambient temperature.

## BRIEF DESCRIPTION OF THE DRAWINGS

Fig. 1 is an electrical circuit diagram showing an example of a charging generator control device according to this invention; and

Fig. 2 is also an electrical circuit diagram showing another example of the control device according to the invention.

## PREFERRED EMBODIMENT OF THE INVENTION

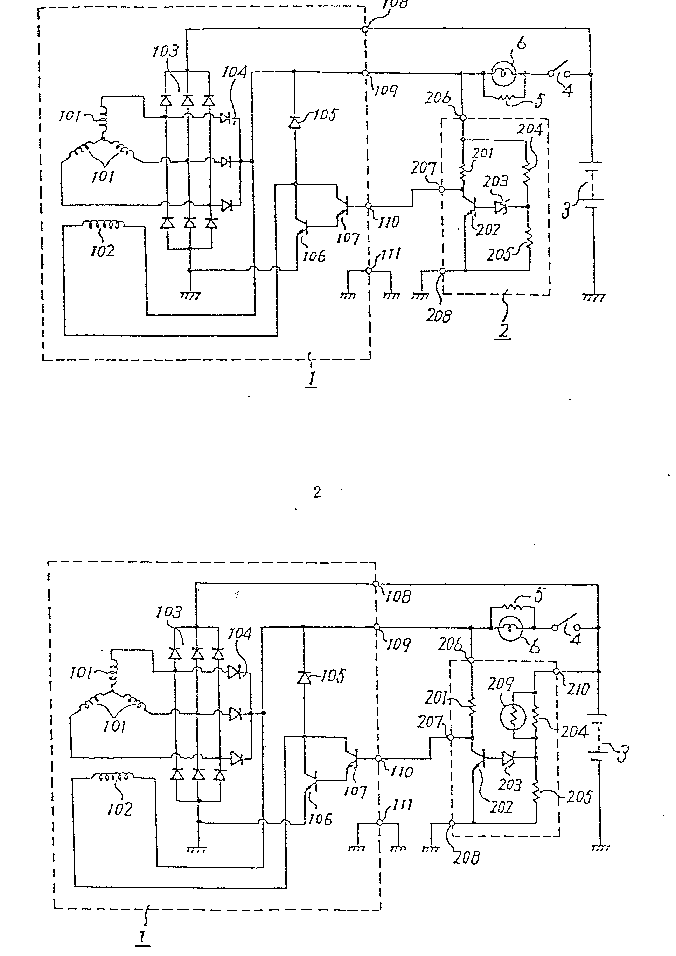

Fig. 1 is an electrical circuit diagram showing a preferred example of a charging generator control device according to this invention which includes a charging generator 1 which is driven by an engine (not shown). The charging generator 1 includes three-phase armature coils 101 which are star-connected, a field coil 102, a full-wave rectifier 103 for subjecting the AC output of the armature coils 101 to full-wave rectification, three-phase auxiliary diodes 104 for supplying a field current to the field coil 102, and an output section having a surge absorbing diode 105 connected in parallel to the field coil 102 and Darlington-connected power transistors 106 and 107 having the collectors thereof connected to one end of the field coil 102 and the emitters grounded. The charging generator further includes a first rectification output terminal 108, a second rectification output terminal 109, a control signal input terminal 110, and an earth or ground terminal 111.

In Fig. 1, reference numeral 2 designates the control section of the charging generator control device which is located at a position different from that of the charging generator 1. The control section 2 includes a resistor 201 in the base circuit of the above-described transistors 106 and 107, a control transistor 202 for controlling the on-off operation of the transistors 106 and 107, a Zener diode 203, resistors 204 and 205 forming a voltage divider circuit for sensing the output voltage of the charging generator 1, a third rectification output terminal 206, a control signal output terminal 207 an earth or ground terminal 208, a thermistor 209, and a voltage sensing terminal 210 for sensing the terminal voltage of a battery 3. In Fig. 1, reference numeral 4 designates a key switch, 5 an initial exciting resistor, and 6 a charge display lamp.

The operation of the charging generator control device thus constructed will be described with reference to Fig. 1. First, the key switch 4 is closed at the time of starting the engine. As a result, a base current is supplied from the battery 3 through the key switch 4, the initial exciting resistor 5, the charge display lamp 6, the terminal 206, the resistor 201 and the terminals 207 and 110 to the output transistor circuit (106 and 107) thereby rendering the latter conductive. Accordingly, a field current is applied from the battery 3 through the key switch 4, the initial exciting resistor 5, the charge display lamp 6 and the terminal 109 to the field coil 102 so that a field magnetomotive force is generated. At the same time, the charge display lamp 6 is turned on by this current thus indicating the fact that the battery 3 is not being charged.

When the engine is started under this condition, AC voltages are induced in the armature coils 101 of the generator 1 which are subjected to full-wave rectification by the full-wave rectifier 103. When the rectification output voltage is lower than a predetermined value, the potential at a temperature gradient characteristic is imparted to the control section 2 so that the charging characteristics of the battery 3 are subjected to temperature correction. The voltage control and charge indication functions of the circuit in Fig. 2 are similar to those of the circuit in Fig. 1. However, in the circuit shown in Fig. 2, the resistance of the thermistor 209 decreases with increasing ambient temperature so as to correspondingly decrease the voltage adjustment value and to correct the charging characteristics with respect to temperature of the battery 3. For this purpose, the voltage sensing terminal 210 is located near the battery 3. In this case also, the control section 2 is located remote from the charging generator 1. Accordingly, the control section is little affected by the generation of heat due to the increase and decrease of the electrical load of the charging generator 1, by the generation of heat due to variations in the mechanical load on the engine, and by the generation of heat in the charging generator control device itself due to variations of the field current. Excellent results are obtained in that the charging characteristics can be corrected accurately in accordance with the ambient temperature by mounting the control section 2 at a part of the vehicle where the temperature is substantially equal to the temperature of the battery 3.

As is apparent from the above description, with the invention, only the control section of the charging generator control device is provided in the form of a unit package, such as in the form of a mold or a metal case, which is separate from the output section of the charging generator control device with the output section sealed in a metal case. Accordingly, the heat resistance, thermal-shock resistance characteristics and vibration resistance of the output section can be remarkably improved. The control section is not affected by the generation of heat in the engine, the charging generator or the charging generator control device itself and accordingly the device can perform temperature correction with a high accuracy and can be made small in size and low in cost with a high reliability.

## INDUSTRIAL UTILITY

This invention is applicable not only to a charging generator control device which charges the battery of a vehicle using the output voltage of a charging generator of the vehicle but also to a charging generator control device which controls the output voltage of a charging generator which is driven by a prime mover such as an internal combustion engine used for charging an auxiliary supply battery for use during service interruptions.

WHAT IS CLAIMED IS:

1. A charging generator control device for charging a battery with the output voltage of a charging generator which is maintained at a predetermined value by controlling the field current of said generator comprising: an output section having power transistor means connected in series with the field coil of said charging generator and a diode connected in parallel with said field coil; and a control section for sensing a terminal voltage of one of said charging generator and said battery for controlling said power transistor means, said control section being located separate from said charging generator and said output section.

2. A device as claimed in claim 1 wherein said output section is integral with said charging generator.

3. A device as claimed in claim 1 wherein said output section is sealed in a metal case.

4. A device as claimed in claim 1 wherein said control section is provided on a vehicle body.

5. A device as claime in any of claims 1-4 wherein said control section subjects the charging characteristics of said battery to temperature correction.

6. A device as claimed in any of claims 1-4 wherein said control section is sealed in a metal case.

7. A device as claimed in any of claims 1-4 wherein said control section is sealed in a resin case.

CLAIMS

(1)     A charging generator control device for charging
a battery by regulating an output of a charging generator to
a substantially desired value by controlling a field current
of the charging generator, characterized by comprising an
output portion sealed in a metal case and having a power
transistor connected in series to a field winding of the
charging generator and a diode connected in parallel to
said field winding, and a control portion sealed in a plastic
or metal case for detecting a terminal voltage of said
charging generator or the battery to control said power
transistor, said output portion being provided integrally
with said charging generator, said control portion being
mounted on a vehicle.

(2)     A charging generator control device as claimed
in claim (1), characterized by that said control portion
compensates charging characteristic of said battery for
temperature.

1/1

0016228

1

2

International Application No PCT/JP79/00022

0016228

I. CLASSIFICATION OF SUBJECT MATTER (if several classification symbols apply, indicate all) 3

According to International Patent Classification (IPC) or to both National Classification and IPC

H 0 2 J 7/24

II. FIELDS SEARCHED

Minimum Documentation Searched 4

| Classification System | Classification Symbols |
|---|---|
| I P C | H 0 2 J 7/24 |

Documentation Searched other than Minimum Documentation
to the Extent that such Documents are Included in the Fields Searched 5

Jitsuyo Shinan Koho          1959-1979
Kokai Jitsuyo Shinan Koho    1971-1979

III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, B1, 50-31933, 1975-10-16 | 1, 4, 5 |
| A | JP, Y1, 46-9935, 1971-4-7 | 2, 7 |
| A | JP, Y1, 43-23227, 1968-10-1 | 3, 6 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

IV. CERTIFICATION

| Date of the Actual Completion of the International Search 2 | Date of Mailing of this International Search Report 2 |
|---|---|
| April 19, 1979 (19.04.79) | May 14, 1979 (14.05.79) |
| International Searching Authority 1 | Signature of Authorized Officer 20 |
| Japanese Patent Office | |